# EUROPEAN PATENT SPECIFICATION

(11) **EP 0 542 510 B1**
(45) Date of publication and mention of the grant of the patent: **23.07.1997**
(21) Application number: 92310267.7
(22) Date of filing: 10.11.1992
(51) Int. Cl.: A23L 1/275, A23L 1/08, A23P 1/08

(54) **Coloured coating material**
Farbiges Überzugsmittel
Matière d'enrobage colorée

(30) Priority: 12.11.1991 EP 91202934
(43) Date of publication of application: 19.05.1993
(73) Proprietor: UNILEVER PLC, London EC4P 4BQ (GB); UNILEVER N.V., 3013 AL Rotterdam (NL)
(72) Inventor: Slemmer, Alfred Daniel, Unilever Research, NL-3133 AT Vlaardingen (NL); Visser, Cornelis, Unilever Research, NL-3133 AT Vlaardingen (NL)
(74) Representative: Kirsch, Susan Edith

(56) References cited:
- FR-A- 2 202 657
- US-A- 4 112 125
- US-A- 4 475 919
- DATABASE WPI Week 7749, Derwent Publications Ltd., London, GB; AN 77-87577Y(49)

## Description

The present invention relates to a thermostable coloured coated material, as well as to a process of preparing such a material.

### BACKGROUND TO THE INVENTION AND PRIOR ART

It is desirable to provide novel coating materials for food products, in particular it is desirable to incorporate coloured particles within such coatings.

It is known to provide food products with an edible coating which is subsequently baked by immersion in hot oil using the conventional deep fat frying techniques. Oil temperatures range from 150-200°C and frying times may vary, according to oil temperatures used, from 5 seconds up to 10 minutes.

The main disadvantage of this method is that no ingredients can be incorporated in the coating material which are thermosensitive, like for instance pieces of fresh vegetables, because at the high temperature prevailing in the frying bath these ingredients degrade or decompose immediately and form charred spots in the final coating so that the product is unacceptable for consumption.

During investigations it has now been found that this disadvantage can be overcome by incorporating a colouring agent into a thermostable matrix based on starch material. The colouring material was dispersed throughout a starch material or a flour which was subsequently gelatinised (or which may have previously been pregelatinised) dried and converted into the required form and shape. When this material was applied onto a foodstuff as a coating material, the coated foodstuff could be kept as long as 10 minutes in a cooking oil at 160°C without any detrimental influence on the colouring agent.

US 3 690 896 (General Mills) discloses a process for making multi-coloured food cereal product comprising continuously introducing at least two different coloured dyes into a continuous cooker on an alternate or sequential basis.

FR 2 202 657 (Unilever) discloses a process for coating ground nuts with a batter-like starch material containing 20 - 40% of a pregelatinised fraction and water.

US 4 475 919 discloses a method of making a powdered natural dye pigment: the method includes suspending a powder (such as starch), dyeing the suspended powder, and removing the liquid (at 50°C) to obtain a dry powder.

US 4 112 125 discloses a semi-moist, shelf-stable and non-bleeding particle for carrying a food flavour and colour : gelatinised starch is used in its manufacture.

### SUMMARY OF THE INVENTION

Accordingly the present invention relates to a thermostable coloured dry crumb coating material comprising a colouring agent in a thermostable matrix based on a starch material, wherein at least 10% by weight of the starch material is gelatinised.

### DISCLOSURE OF THE INVENTION

The thermostable matrix is based on a starch material, which is at least partially gelatinised, such as cereal starch, root starch, tubular starch or waxy starch material. Examples of cereal starches are rice starch, wheat starch, rye starch, oat starch, maize or corn starch; an example of a tubular starch is potato starch; an example of a root starch is tapioca or cassave starch; and an example of a waxy starch is waxy maize starch or waxy rice starch.

Also amylose and starch derivatives such as starch esters, starch ethers, dextrins, cyclodextrins and heat-moisture treated starches may be used.

Furthermore, mixtures of these various starches may be used. The starch material may be the starch as such, or alternatively a flour comprising the starch material.

It is essential that at least some of the starch is gelatinised. Preferably at least 10% by weight of the starch is gelatinised, more preferably between 10% and 50% by weight of the starch is gelatinised. Even more preferred is that the coating comprises 20 - 30% gelatinised starch.

It is preferred that the gelatinised starch is a waxy starch. Additional native waxy starch may optionally be present as well as optional native non-waxy starches as disclosed above.

The content of gelatinised starch within the composition used to form the coating is important with respect to the processing of the coating. Too high a content of gelatinised starch may cause a sticky, lumpy product, whereas too low a content provides a powdery product.

The starch may be subjected to gelatinisation in presence of the colouring agent, but the starch material may also already at least partially have been pregelatinised and then the colouring agent is dispersed throughout the starch material.

The colouring agent may be selected from naturally occurring colouring agents, synthetic, preferably ingestible, dyes and mixtures thereof. Preferably naturally occurring colouring agents are used, for example annatto extract, red beet powder, curcuma, caramel, grape skin extract, carrot oil, paprika, turmeric, chlorophyll and carotene. By mixing certain colours various shades or new colours may be obtained. If the coloured coating material is not applied for food uses, then various types of synthetic dyes may be used.

Preferably both the colouring agent and the thermostable matrix based on starch material are ingestible materials.

The thermostable matrix of starch material may further comprise an additive selected from acidulants, such as food grade acids; antioxidants; emulsifiers, such as fatty acid lactylates and fatty acid monoglycerides; flavouring agents, preferably savory flavouring agents; flavour precursors; sweeteners; stabilisers, such as gums; vitamins; minerals, such as common salt; spices, preservatives and mixtures thereof.

The thermostable coloured coating material is preferably used in conjunction with food materials. To this purpose it can be brought into any required form, such as fancy forms, like animals, trees, letters; polygonal form; multifaceted form; squares; circular form; ellipsoids, and the like. The thickness of the coating material may vary. The coloured coating material may be applied in a mixture leading to a polychromatic coating. Preferably the coloured coating material is either included as a final coating on already conventionally coated products or is admixed with conventional coating materials to provide speckles of colour within the final coating. The particle size of the thermostable, coloured coating material may be adjusted by size reduction and sieving techniques.

The thermostable coloured coating material may be used as coating for a variety of food products such as burger-like meat, fish and poultry products, croquettes, savory snack products, like chips to be made from a cooked potato dough, popcorn like snack products, for example those described in European Patent Application EP-A-0 375 006 (Unilever) and Dutch Patent NL-B-154 923 (Unilever). The thermostable coloured coating material may be provided at the surface of another coating, or may be distributed throughout another coating material.

The coloured coating material may also be used in conjunction with those products, which are not subjected to a deep fat frying treatment, such as confectionery material, sweet snacks, ice cream, and the like foodstuffs and in such cases may also be incorporated into such products. The coating material according to the present invention may also be used on microwaveable products.

### PREPARATION OF THE COATING MATERIAL

The thermostable coloured coating material according to the invention may be prepared by mixing the required colouring agent with the starch material which may have been pregelatinised, and optionally further additives, which is mixed with water to provide the required consistency.

The relatively low viscosity pancake batter-like material is then dried. The drying process will effect some gelatinisation of the starch material, and may be effected via, for example, a drum dryer or by heating the batter formed into a thin layer, preferably from 0.1 to 2mm, upon a suitable surface such as a plate, travelling belt and the like, at a temperature of about 75°C to 200°C, preferably 100°C to 150°C.

When the content of gelatinised starch is very low (less than 25%) or no gelatinised starch is present in the batter like composition, the batter is preferably confined in a thin layer between two flat surfaces for the drying process.

The dried portions are subsequently subjected to size reduction and sieving techniques to provide the desired crumb size.

The mixture of colouring agent and starch based matrix material may also have the consistency of a dough so as to enable extrusion in a required shape and subsequent drying, or conversion of the said coloured dough into a sheet, out of which the required forms and shapes of the final colouring coating material may be, preferably continuously, cut or punched, and subsequently dried.

The coloured dough may also be subjected to extrusion and expansion into vacuum to obtain puffed products, having a porous, expanded structure. The expansion may also be obtained by using blowing agents like bicarbonate/acid mixtures, or by a proper selection of the starch material of the matrix. During the extrusion process the starch based material will at least partially be gelatinised, or the pregelatinised material will further be gelatinised. During the extrusion more than one colour may be used or coextrusion techniques using differently coloured materials may be applied.

The invention will now be illustrated by the following examples:

### EXAMPLES 1 TO 6

A variety of compositions as detailed in Table 1 were mixed and dried at 100°C, 150°C and 200°C for 60 minutes, 20 minutes and 10 minutes respectively as a thin layer upon a single glass plate. The dried material could be easily removed from the glass plate in the form of flake-like red-orange coloured coating material.

Results shown in Table 1 illustrate the effect of both levels of gelatinised starch and drying temperature on coating quality. At 100°C the ratio of gelatinised to non-gelatinised starch is not crucial however at other drying temperatures the preferred ratio of gelatinised starch to non-gelatinised starch is clearly 1:3.

### EXAMPLES 7 TO 9

Compositions containing 100% native starch as detailed in Table 2 were dried at either 100°C for 60 minutes as a thin layer on a single glass plate or compressed between two glass plates and dried at 100°C for 45 minutes followed by removal of the top plate and further drying for 30 minutes at 100°C. Results shown in Table 2 clearly show that compositions containing no gelatinised starch prior to drying require to be dried between two glass plates in order to produce a suitable product.

**Table 2**

| **COMPOSITION (g)** | **EXAMPLE** | | |
|---|---|---|---|
| | **7** | **8** | **9** |
| potato starch | 40 | | |
| wheat starch | | 40 | |
| corn starch | | | 40 |
| curcumin | 5 | 5 | 5 |
| water | 40 | 40 | 40 |
| NO TOP PLATE | powdery/gritty | powdery/gritty | powdery/gritty |
| TOP PLATE | 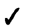 | 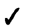 | 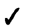 |

**Table 1**

| **COMPOSITION (g)** | **EXAMPLE** | | | | | |
|---|---|---|---|---|---|---|
| | **1** | **2** | **3** | **4** | **5** | **6** |
| native waxy starch | - | - | - | - | - | 20 |
| native corn starch | 30 | 20 | 10 | - | - | - |
| native potato starch | - | - | - | - | 20 | - |
| pre-gelatinised waxy maize starch | 10 | 20 | 30 | 40 | 20 | 20 |
| curcumin | 5 | 5 | 5 | 5 | 5 | 5 |
| pepper | - | 1 | 1 | 1 | 1 | 1 |
| water | 60 | 70 | 100 | 130 | 70 | 70 |

| DRYING TEMPERATURE | | | | | | |
|---|---|---|---|---|---|---|
| 100°C | 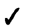 | 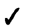 | 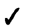 | 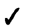 | 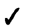 | 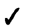 |
| 150°C | 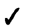 | 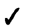 | 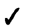 | x | x | puffed |
| | | puffed | | | | |
| 200°C | 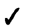 | 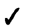 | x | x | x | puffed |
| | | puffed | powdery | | | |

### EXAMPLE 10

A mixture of 5 grams curcuma powder and 5 grams of beet powder was stirred into a slurry of 10 grams of pregelatinised waxy maize starch and 30 grams of maize starch in 100 grams-of water. A red-orange coloured slurry was obtained which was subsequently spread in a thin layer of about 1 mm thickness sandwiched between two glass plates. The mixture was subjected to gelatinisation by heating it for 45 minutes at 100°C. Subsequently, the top glass plate was taken off and the gelatinised coloured starch material was dried for 30 minutes at 100°C. The dried material could easily be removed from the glass plate in the form of about 0.1 - 0.2 mm thick flake-like red-orange coloured coating material.

Little particles of this coloured coating material having a size from about 1-10 mm were coated onto the exterior surface of coated peanuts as prepared according to Example 1 of Dutch Patent NL-B-154 923 before the deep fat frying thereof. After the deep fat frying coated peanuts were obtained with a very pleasant, speckled appearance, having clear red-orange speckles against a light brownish-yellow background colour and which had an excellent taste.

### EXAMPLE 11

A mixture of 10 grams of pregelatinised waxy maize starch, 30 grams of waxy maize starch, and 1 gram of chlorophyll powder was suspended in 100 grams of water and the obtained deep green slurry was further treated as described in Example 10.

When the obtained little particles of this deep green coloured coating material were coated onto the exterior surface of coated peanuts as prepared according to Example 1 of Dutch Patent NL-B-154 923 before the deep fat frying thereof, and subsequently the peanuts were fried for 8.75 minutes at 160°C in cooking oil. Coated peanuts were obtained with deep green speckles, which had a slightly expanded ("puffed") structure. The obtained product had a very pleasant appearance and an excellent taste.

### EXAMPLE 12

A mixture of 20 grams of native potato starch, 20 grams of pregelatinised waxy maize starch, 5 grams of curcuma powder and 1 gram of black pepper was suspended in 100 grams of water and the obtained yellow-coloured slurry was spread in a layer of about 1 mm thickness, on a glass plate. The mixture was kept for 60 minutes at 100°C. The dried material, of which one side had a smooth glossy surface and one side had a more coarse surface, could easily be removed from the glass plate in the form of about 0.1 - 0.3 mm thick flake-like yellow coloured coating material.

### EXAMPLE 13

In the same way as described in Example 12 a coloured coating material with a savory taste was prepared from 30 grams of native wheat starch, 10 grams of pregelatinised waxy maize starch, 10 grams of yeast extract powder and 5 grams of curcuma powder. A savory, yellow-coloured coating material was obtained. This coating material was applied in a particle size range of about 1 - 5 mm to croquettes, admixed with the normal coating material for the croquettes in an amount of 1% by weight (based on the total coating material). The obtained coated croquettes were fried for 4 - 5 minutes in a frying oil (deep fat fryer) of 180°C.

Excellent croquettes were obtained with a tasty, crisp, yellow speckled coating.

## Claims

1. A thermostable, coloured, dry crumb coating material comprising a colouring agent in a thermostable matrix based on a starch material; wherein at least 10% by weight of the starch material is gelatinised.

2. A thermostable, coloured, dry crumb coating material according to claim 1 wherein the thermostable matrix and the colouring agent are ingestible materials.

3. A thermostable, coloured, dry crumb coating material according to claims 1 or 2, characterised in that the thermostable matrix is based on a starch material selected from the group consisting of cereal starches, root starches, tubular starches, waxy starches, amylose, starch esters, starch ethers, dextrins, cyclodextrins, heat-moisture treated starches and mixtures thereof.

4. A thermostable, coloured, dry crumb coating material according to claim 3 wherein the starch material is selected from the group consisting of potato starch, rice starch, wheat starch, rye starch, oat starch, tapioca starch, maize or corn starch, and mixtures thereof.

5. A thermostable, coloured, dry crumb coating material according to any preceding claim characterised in that the colouring agent is selected from the group consisting of naturally occurring colouring agents, synthetic ingestible dyes and mixtures thereof.

6. A thermostable, coloured, dry crumb coating material according to any preceding claim characterised in that the colouring agent is selected from the group consisting of annatto extract, (red) beet powder, curcuma, caramel, grape skin extract, carrot oil, paprika, turmeric, carotene, chlorophyll, synthetic ingestible dyes, and mixtures thereof.

7. A thermostable coloured, dry crumb coating material according to any preceding claim characterised in that it comprises an additive selected from the group consisting of acidulants; antioxidants; emulsifiers; flavouring agents; flavour precursors; sweeteners; stabilisers; vitamins; minerals; spices; preservatives; and mixtures thereof.

8. A thermostable, coloured, dry crumb coating material according to any preceding claim, characterised in that it has a form or shape selected from the group consisting of fancy forms; polygonal form; multifaceted form; square; circular form and ellipsoid form.

9. A thermostable, coloured, dry crumb coating material according to any preceding claim wherein between 10% and 50% by weight of the starch material is gelatinised.

10. Use of a thermostable, coloured, dry crumb coating material according to claims 2 to 9 to coat a foodstuff.

11. A process of coating a foodstuff, characterised in that a foodstuff is at least partially provided with a coating material according to any one of claims 2 to 9.

12. A process of coating a foodstuff, characterised in that a foodstuff is at least partially covered with a coating material comprising a coating material according to any one of claims 2 to 9.

13. A process of preparing a thermostable, coloured, dry crumb coating material as claimed in claim 1, the process comprising mixing a colouring agent into a slurry of a starch based matrix material in a liquid, and drying the mixture.

14. A process according to claim 13, characterised in that the slurry of starch based matrix material comprises less than 25% by weight of a pregelatinised starch or no pregelatinised starch, and the mixture is dried by heating a thin layer of the mixture between two plates.

15. A process according to claim 13, characterised in that the slurry of starch based matrix material consists of 10-100% by weight of a pregelatinised starch, the remainder being a native starch, and the mixture is dried by a drum dryer or by heating a thin layer of the mixture on a surface of a heat resistant material.

16. A process according to claim 14 or claim 15 wherein the thin layer is from 0.1 to 2mm thick.

17. A process according to any one of claims 14 to 16 wherein the drying is effected at a temperature of from 75°C to 200°C.

18. A process according to claim 17 wherein the drying is effected at a temperature of from 100°C to 150°C.

## Patentansprüche

1. Wärmestabiles, gefärbtes, trockenes Krumen-Überzugsmaterial, welches ein Färbemittel in einer wärmestabilen Matrix auf der Basis eines Stärkematerials umfaßt; wobei zumindest 10 Masse-% des Stärkematerials gelatiniert sind.

2. Wärmestabiles, gefärbtes, trockenes Krumen-Überzugsmaterial nach Anspruch 1, wobei die wärmestabile Matrix und das Färbemittel eßbare Materialien sind.

3. Wärmestabiles, gefärbtes, trockenes Krumen-Überzugsmaterial nach Anspruch 1 oder 2, dadurch gekennzeichnet, daß die wärmestabile Matrix auf einem Stärkematerial basiert, ausgewählt aus der Gruppe bestehend aus Getreidestärken, Wurzelstärken, Röhrenstärken, Wachsstärken, Amylose, Stärkeestern, Stärkeethern, Dextrinen, Cyclodextrinen, mit feuchter Hitze behandelten Stärken und Mischungen hievon.

4. Wärmestabiles, gefärbtes, trockenes Krumen-Überzugsmaterial nach Anspruch 3, wobei das Stärkematerial ausgewählt ist aus der Gruppe bestehend aus Kartoffelstärke, Reisstärke, Weizenstärke, Roggenstärke, Haferstärke, Tapiokastärke, Mais- oder Kukuruzstärke und Mischungen hievon.

5. Wärmestabiles, gefärbtes, trockenes Krumen-Überzugsmaterial nach einem der vorhergehenden Ansprüche, dadurch gekennzeichnet, daß das Färbemittel ausgewählt ist aus der Gruppe bestehend aus natürlich vorkommenden Färbemitteln, synthetischen eßbaren Farbstoffen und Mischungen hievon.

6. Wärmestabiles, gefärbtes, trockenes Krumen-Überzugsmaterial nach einem der vorhergehenden Ansprüche, dadurch gekennzeichnet, daß das Färbemittel ausgewählt ist aus der Gruppe bestehend aus Annatto-Extrakt, (rote) Beete-Pulver, Curcuma, Karamel, Traubenhaut-Extrakt, Karottenöl, Paprika, Turmeron, Carotin, Chlorophyll, synthetischen eßbaren Farbstoffen und Mischungen hievon.

7. Wärmestabiles, gefärbtes, trockenes Krumen-Überzugsmaterial nach einem der vorhergehenden Ansprüche, dadurch gekennzeichnet, daß es ein Additiv umfaßt, ausgewählt aus der Gruppe bestehend aus Säuerungsmitteln, Antioxidantien, Emulgatoren, Geschmacksstoffen, Geschmacksvorläufern, Süßstoffen, Stabilisatoren, Vitaminen, Mineralien, Gewürzen, Konservierungsmitteln und Mischungen hievon.

8. Wärmestabiles, gefärbtes, trockenes Krumen-Überzugsmaterial nach einem der vorhergehenden Ansprüche, dadurch gekennzeichnet, daß es eine Form oder Gestalt aufweist, ausgewählt aus der Gruppe bestehend aus Fantasieformen, Polygonform, Mehrfacettenform, quadratisch, kreisförmig und ellipsoidförmig.

9. Wärmestabiles, gefärbtes, trockenes Krumen-Überzugsmaterial nach einem der vorhergehenden Ansprüche, wobei zwischen 10 Masse-% und 50 Masse-% des Stärkematerials gelatiniert sind.

10. Verwendung eines wärmestabilen, gefärbten, trockenen Krumen-Überzugsmaterials nach einem der Ansprüche 2 bis 9 beim Überziehen eines Nahrungsmittels.

11. Verfahren zum Überziehen eines Nahrungsmittels, dadurch gekennzeichnet, daß ein Nahrungsmittel zumindest teilweise mit einem Überzugsmaterial nach einem der Ansprüche 2 bis 9 versehen wird.

12. Verfahren zum Überziehen eines Nahrungsmittels, dadurch gekennzeichnet, daß ein Nahrungsmittel zumindest teilweise mit einem Überzugsmaterial bedeckt wird, das ein Überzugsmaterial nach einem der Ansprüche 2 bis 9 umfaßt.

13. Verfahren zur Herstellung eines wärmestabilen, gefärbten, trockenen Krumen-Überzugsmaterials nach Anspruch 1, welches Verfahren das Mischen eines Färbemittels in eine Aufschlämmung eines Materials mit einer auf Stärke basierenden Matrix in einer Flüssigkeit, und Trocknen der Mischung umfaßt.

14. Verfahren nach Anspruch 13, dadurch gekennzeichnet, daß die Aufschlämmung des Materials mit einer auf Stärke basierenden Matrix weniger als 25 Masse-% einer vorgelatinierten Stärke oder keine vorgelatinierte Stärke umfaßt, und die Mischung durch Erhitzen einer dünnen Schicht der Mischung zwischen zwei Platten getrocknet wird.

15. Verfahren nach Anspruch 13, dadurch gekennzeichnet, daß die Aufschlämmung des Materials mit einer auf Stärke basierenden Matrix aus 10 bis 100 Masse-% einer vorgelatinierten Stärke besteht, wobei der Rest eine native Stärke ist, und die Mischung durch einen Trommeltrockner oder durch Erhitzen einer dünnen Schicht der Mischung auf einer Oberfläche eines wärmebeständigen Materials getrocknet wird.

16. Verfahren nach Anspruch 14 oder Anspruch 15, wobei die dünne Schicht 0,1 bis 2 mm dick ist.

17. Verfahren nach einem der Ansprüche 14 bis 16, bei welchem die Trocknung bei einer Temperatur von 75°C bis 200°C durchgeführt wird.

18. Verfahren nach Anspruch 17, bei welchem die Trocknung bei einer Temperatur von 100°C bis 150°C durchgeführt wird.

## Revendications

1. Matière d'enrobage en petits morceaux, sèche, colorée, thermostable, qui comprend une matière colorante dans une matrice thermostable à base d'une matière amylacée ; dans laquelle au moins 10 % en poids de la matière amylacée est gélatinisée.

2. Matière d'enrobage en petits morceaux, sèche, colorée, thermostable selon la revendication 1, dans laquelle la matrice thermos table et la matière colorante sont des matières pouvant être ingérées.

3. Matière d'enrobage, en petits morceaux, sèche, colorée, thermostable selon la revendication 1 ou 2, caractérisée en ce que la matrice thermostable est à base d'une matière amylacée choisie dans le groupe comprenant les amidons de céréales, les amidons de racines, les amidons de tubercules, les amidons cireux, l'amylose, les esters d'amidon, les éthers d'amidon, les dextrines, les cyclodextrines, les amidons traités à l'humidité à la chaleur et leurs mélanges.

4. Matière d'enrobage, en petits morceaux, sèche, colorée, thermostable selon la revendication 3, dans laquelle la matière amylacée est choisie dans le groupe comprenant la fécule de pommes de terre, l'amidon de riz, l'amidon de blé, l'amidon de seigle, l'amidon d'avoine, l'amidon de tapioca, l'amidon de maïs ou de céréales et leurs mélanges.

5. Matière d'enrobage, en petits morceaux, sèche, colorée, thermostable, selon l'une quelconque des revendications précédentes, caractérisée en ce que la matière colorante est choisie dans le groupe comprenant les colorants d'origine naturelle, les colorants synthétiques pouvant être ingérés et leurs mélanges.

6. Matière d'enrobage, en petits morceaux, sèche, colorée, thermostable selon l'une quelconque des revendications précédentes, caractérisée en ce que la matière colorante est choisie dans le groupe comprenant l'extrait de rocou, la poudre de betterave (rouge), le curcuma, le caramel, l'extrait de peau de raison, l'huile de carottes, le paprika, le safran, le carotène, la chlorophylle, les colorants synthétiques pouvant être ingérés et leurs mélanges.

7. Matière d'enrobage, en petits morceaux, sèche, colorée, thermostable selon l'une quelconque des revendications précédentes, caractérisée en qu'elle comprend un additif choisi dans le groupe comprenant les acidulants, les antioxydants, les émusilfiants, les agents aromatisants, les précurseurs d'arôme, les édulcorants, les stabilisants, les vitamines, les minéraux, les épices, les conservateurs et leurs mélanges.

8. Matière d'enrobage, en petits morceaux, sèche, colorée, thermostable selon l'une quelconque des revendications précédentes, caractérisée en ce qu'elle possède une forme ou un état choisi dans le groupe comprenant les formes fantaisistes, une forme polygonale, une forme à plusieurs facettes, un carré, une forme circulaire et une forme ellipsoïdale.

9. Matière d'enrobage, en petits morceaux, sèche, colorée, thermostable selon l'une quelconque des revendications précédentes dans laquelle entre 10 % et 50 % en poids de la matière amylacée sont gélatinisés.

10. Utilisation d'une matière d'enrobage en petits morceaux, séche, colorée, thermostable selon les revendications 2 à 9, pour enrober un produit alimentaire.

11. Procédé d'enrobage d'un produit alimentaire, caractérisé en ce qu'un produit alimentaire est au moins partiellement pourvu d'une matière d'enrobage selon l'une quelconque des revendications 2 à 9.

12. Procédé d'enrobage d'un produit alimentaire, caractérisé en ce qu'un produit alimentaire est au moins partiellement couvert d'une matière d'enrobage comprenant une matière d'enrobage selon l'une quelconque des revendications 2 à 9.

13. Procédé de préparation d'une matière d'enrobage en petits morceaux, sèche, colorée, thermostable selon la revendication 1, le procédé comprenant le mélange d'une matière colorante dans une suspension d'une matière de matrice à base d'amidon dans un liquide et le séchage du mélange.

14. Procédé selon la revendication 13, caractérisé en ce que la suspension de la matière de matrice à base d'amidon comprend moins de 25 % en poids d'un amidon prégélatinisé ou pas d'amidon prégélatinisé, et le mélange est séché par chauffage d'une couche mince du mélange entre deux plaques.

15. Procédé selon la revendication 13, caractérisé en ce que la suspension de la matière de matrice à base d'amidon se compose de 10 - 100 % en poids d'un amidon prégélatinisé, le reste étant un amidon natif, et le mélange est séché au moyen d'un sécheur à tambour ou par chauffage d'une couche mince du mélange sur une surface d'une matière résistant à la chaleur.

16. Procédé selon la revendication 14 ou 15, dans lequel la couche mince est d'une épaisseur allant de 0,1 à 2 mm.

17. Procédé selon l'une quelconque des revendications 14 à 16, dans lequel le séchage s'effectue à une température de 75°C à 200°C.

18. Procédé selon la revendication 17, dans lequel le séchage s'effectue à une température allant de 100°C à 150°C.
